# FASCICULE DE BREVET EUROPEEN

(11) **EP 0 989 043 B1**
(45) Date de publication et mention de la délivrance du brevet: **07.12.2005**
(21) Numéro de dépôt: 99460058.3
(22) Date de dépôt: 23.09.1999
(51) Int. Cl.: B62B 9/20, B62B 5/06

(54) **Poussette pliante, à poignée inclinable et équipée d'une commande de pliage déportée**
Zusammenklappbarer Kinderwagen mit schwenkbarem Griff und fernbedienbare Faltvorrichtung
Collapsable stroller with pivotable handle bar and a remotely controlled collapsing device

(30) Priorité: 23.09.1998 FR 9812059
(43) Date de publication de la demande: 29.03.2000
(73) Titulaire: DOREL FRANCE SA, 49309 Cholet (FR)
(72) Inventeur: Ageneau, Laurent, 49300 Cholet (FR)
(74) Mandataire: Vidon, Patrice

(56) Documents cités:
- EP-A- 0 494 701
- WO-A-98/47753

## Description

Le domaine de l'invention est celui de la puériculture. Plus précisément, l'invention concerne les poussettes pour enfant, et plus précisément encore les poussettes pliantes.

On connaît déjà de très nombreux types de poussettes pliantes. D'une façon générale, les constructeurs de telles poussettes cherchent en permanence à améliorer de nombreux aspects, et notamment la sécurité de l'enfant transporté, la facilité et l'efficacité du pliage et du dépliage, et plus généralement la facilité et l'ergonomie d'utilisation de la poussette.

Ainsi, dans ce dernier objectif, on a pensé à équiper les poussettes d'une poignée dont la position est réglable, de façon que celle-ci soit adaptée au désir et au besoin de l'utilisateur, quelle que soit sa taille et ses habitudes.

Une telle poignée, qui offre un confort supplémentaire à l'utilisateur, doit bien sûr être simple à réaliser et à mettre en oeuvre, solide et sûre, et facile à manipuler. Généralement, cette fonction est assurée par deux articulations, qui relient la poignée aux deux bras-poussoirs s'étendant latéralement de chaque côté de la poussette, le plus souvent sensiblement dans le prolongement des piètements avant.

Chacune de ces articulations est constituée de deux pièces principales, solidaires respectivement de la poignée et d'un des bras-poussoirs. Ces deux pièces sont articulées l'une par rapport à l'autre, par pivotement autour d'un axe.

En mode normal (c'est-à-dire lorsque la poignée est dans la position voulue) les deux pièces sont solidarisées de façon fixe l'une à l'autre, par exemple par un système d'engrenage. La position de la poignée par rapport aux bras-poussoirs est donc, alors, fixe.

Le réglage peut se faire en désolidarisant momentanément les deux pièces, qui peuvent alors pivoter l'une par rapport à l'autre, ce qui permet de modifier la position de la poignée. Cette désolidarisation peut par exemple être obtenue en actionnant un bouton de libération, mobile selon l'axe de pivotement, de façon que ce bouton désengrenne provisoirement le système d'engrenage.

Toujours dans le but d'améliorer l'ergonomie et de faciliter la tâche de l'utilisateur, on cherche également à simplifier les manipulations nécessaires au pliage de la poussette.

Classiquement, un double mécanisme est prévu, de chaque côté de la poussette, à l'emplacement où s'effectue réellement le déverrouillage et le pliage (qu'il s'agisse de moyens permettant le coulissement des bras-poussoirs le long des piètements avant ou à l'intérieur de ces derniers, ou des charnières permettant de ramener par basculement les bras-poussoirs le long de ces piètements avant).

Cette technique connue présente l'inconvénient d'être relativement peu aisée à mettre en oeuvre. En effet, elle suppose une double manipulation, puisqu'il faut, en général, agir de façon simultanée sur les deux côtés de la poussette. De plus, cela oblige l'utilisateur à se baisser pour effectuer le déverrouillage, puis à agir, d'une façon ou d'une autre, sur les bras-poussoirs. Enfin, du fait de leur position, ces moyens de déverrouillage peuvent être accessibles à l'enfant assis dans la poussette. Des sécurités complémentaires sont donc nécessaires pour empêcher ce dernier d'effectuer un déverrouillage intempestif.

Une solution à ces différents problèmes a été proposée, qui consiste à déporter les moyens de commande du déverrouillage au niveau de la poignée, à un emplacement directement accessible par l'utilisateur. Dans ce cas, cette commande agit sur les moyens de déverrouillage par l'intermédiaire de câbles circulant à l'intérieur de la poignée et des bras-poussoirs. En actionnant la commande, on tire sur les câbles qui déverrouillent les moyens de déverrouillage de façon à permettre le pliage de la poussette. Pour garantir un guidage aisé et efficace des câbles, il est nécessaire que ceux-ci ne forment pas d'angles fermés.

Malheureusement, selon l'art antérieur, les deux aspects décrits ci-dessus sont clairement incompatibles. En effet, les articulations permettant le réglage de la position du guidon sont des éléments pleins, équipés d'une mécanique particulière, mobile selon un axe perpendiculaire à celui que devrait suivre le câble. Ces articulations forment un bouchon tant à l'extrémité des poignées qu'à l'extrémité des bras-poussoirs. En conséquence, il ne saurait être question d'y faire circuler un câble de commande.

De plus, dans l'hypothèse ou l'homme du métier envisagerait malgré tout cette possibilité, il constaterait aussitôt qu'il existe un risque important, non compatible avec les obligations de sécurité. En effet, en modifiant la position de la poignée par rapport au bras-poussoir, il apparaît clairement que l'on risque de détendre le câble, qui ne pourrait alors plus assurer sa fonction de déverrouillage lorsqu'on actionnerait la commande, ou pire encore de tendre le câble, ce qui risquerait de provoquer un déverrouillage et un repliage intempestif, alors même que l'enfant peut encore être installé dans la poussette.

Le document EP-0 494 701 présente une technique mettant en oeuvre des moyens de verrouillage de la poussette dans les positions fermée et ouverte de façon à empêcher des accidents dus à une mauvaise manipulation du système de pliage et de dépliage.

Le document WO-98 47753, non publié à la date de dépôt de la présente demande de brevet, décrit une poussette à poignée réglable grâce à une articulation, un câble de déverrouillage circulant à l'intérieur de l'articulation, parallèlement à l'axe de pivotement de celle-ci.

Un inconvénient de cette technique est que le câble forme des angles très fermés, nuisant à son déplacement, et introduisant des risques de blocage et d'usure.

L'invention a notamment pour objectif de pallier ces différents inconvénients de l'état de l'art.

Plus précisément, un objectif de l'invention est de fournir une poussette pour enfant, présentant une ergonomie optimisée pour l'utilisateur, aussi bien en fonctionnement normal (position de la poignée), que lors des opérations de pliage et de dépliage (position des moyens de commande du déverrouillage des moyens de pliage). Il convient à cet égard de noter que cet objectif fait en lui-même partie de l'invention. En effet, comme on l'a indiqué plus haut, ces deux fonctions ont jusqu'ici toujours été considérées comme totalement incompatibles.

Un autre objectif de l'invention est de fournir une telle poussette, qui soit sûre et fiable, en toutes conditions.

L'invention a également pour objectif de fournir une poussette, qui soit simple et peu coûteuse à fabriquer et à monter. Notamment, un objectif de l'invention est de fournir une telle poussette qui n'introduit pas de surcoût important, par rapport aux poussettes connues.

Encore un objectif de l'invention est de fournir une telle poussette, qui soit facile à utiliser et à manipuler, par tout utilisateur.

Un autre objectif de invention est de fournir une telle poussette, dans laquelle les câbles de commande du déverrouillage sont efficacement guidés et aisés à manipuler.

Ces objectifs, ainsi que d'autres qui apparaîtront par la suite, à l'aide d'une poussette pliante, du type comprenant un châssis comprenant notamment deux piètements avant, deux piètements arrière et une poignée de guidage montée sur deux éléments de liaison s'étendant sensiblement dans le prolongement desdits piètements avant, et étant mobiles par rapport à ces derniers, entre une position dépliée et une position pliée, ladite poignée comprenant des moyens de déverrouillage actionnant au moins un câble de déverrouillage circulant dans ladite poignée et dans au moins un desdits éléments de liaison, et assurant le déverrouillage d'au moins un élément de verrouillage de châssis, de façon à permettre le passage de ladite position dépliée à ladite position pliée.

Selon l'invention telle que définie dans la revendication 1, ladite poignée est articulée par rapport auxdits éléments de liaison, par l'intermédiaire de deux éléments d'articulation, le ou lesdits cables de déverrouillage étant guidés au travers desdits éléments d'articulation, de façon que, pour chacun desdits câbles de déverrouillage, la distance entre des premiers moyens d'accrochage d'une première extrémité du dudit câble auxdits moyens de déverrouillage et des second moyens d'accrochage de la seconde extrémité dudit câble auxdits moyens de déverrouillage de châssis, soit constante, quelle que soit la position d'inclinaison de ladite poignée.

Ainsi, la modification de l'inclinaison de la poignée n'influe en aucune manière sur les câbles de déverrouillage. Ces derniers ne risquent donc ni d'être détendus, ni d'activer involontairement le déverrouillage, lors d'une modification de l'inclinaison de la poignée.

Il est à noter que cette technique peut s'appliquer à de très nombreux types de poussettes et autres voitures d'enfant, quelle que soit le type de pliage mis en oeuvre (par exemple pliage à plat, ou pliage compact reposant sur un châssis en X)

Des formes de réalisation particulières de l'invention sont donneés dans les revendications dépendantes.

Préférentiellement, chacun desdits câbles de verrouillage est guidé, à l'intérieur de l'élément de liaison, vers l'extérieur de ladite poussette.

De cette façon, les angles formées par les câbles sont les plus ouverts, et il est plus aisé de réaliser certaines pièces des éléments d'articulation.

Selon un mode de réalisation particulier de l'invention, chacun desdits éléments d'articulation comprend deux pièces solidaires respectivement de ladite poignée et d'un desdits éléments de liaison, et un bouton de commande monté selon ledit axe de pivotement et pouvant prendre deux positions extrêmes sur ledit axe de pivotement :
- une position de repos, prise par défaut, dans laquelle lesdites pièces de l'élément d'articulation sont solidarisées l'une à l'autre ; et
- une position de réglage, dans laquelles lesdites pièces de l'élément d'articulation sont libres l'une par rapport à l'autre, de façon à permettre la modification de l'inclinaison de ladite poignée,
deux ouvertures étant ménagées dans ledit bouton de commande, de façon que ledit câble de déverrouillage circule librement au niveau dudit axe de pivotement, quelle que soit la position dudit bouton de commande.

Selon un autre aspect avantageux de l'invention, lesdits moyens de déverrouillage comprennent un bouton central, agissant sur deux biellettes symétriques, de façon à tirer lesdits câbles de déverrouillage lorsqu'on actionne ledit bouton central.

Préférentiellement, lesdites biellettes pivotent autour d'axes distincts. Cela permet de réaliser aisément une sécurité anti-déverrouillage.

Le déplacement de chacune desdites biellettes peut avantageusement être guidé par un pion solidaire de ladite biellette et circulant dans une ouverture ou une rainure fixe par rapport à ladite poignée.

Selon encore un autre aspect avantageux de l'invention, lesdits moyens de verrouillage comprennent au moins un pion de verrouillage monté dans un desdits éléments de liaison, et coopérant avec une encoche correspondante ménagée dans un desdits piétements avant, ledit pion étant monté de façon qu'il se rétracte à l'intérieur dudit élément de liaison lorsque l'on tire sur le câble de déverrouillage correspondant, de façon à permettre le coulissement dudit élément de liaison à l'intérieur dudit piétement avant.

Préférentiellement, ledit pion est monté sur une lame logée dans un logement d'une pièce pouvant coulisser à l'intérieur dudit élément de liaison, et dont l'une des extrémités est solidarisée à l'extrémité inférieure dudit élément de liaison par l'intermédiaire de moyens de rappel, et dont l'autre extrémité est solidaire dudit câble de déverrouillage, ledit logement étant conformé de façon que:
- en position de repos du cable de déverrouillage, ledit pion tend à coopérer avec l'encoche correspondante ;
- lorsqu'on agit sur le cable de déverrouillage, la lame portant ledit pion est guidée vers l'intérieur de l'élément de liaison, entraînant ledit pion et permettant ainsi le déverrouillage.

Ladite lame est avantageusement repliée sur elle-même, et forme des moyens de rappel tendant à ramener ledit pion en position de verrouillage. Par ailleurs, selon un aspect avantageux de l'invention, permettant d'obtenir un meilleur guidage du pion, ledit logement présente deux plans inclinés de guidage, coopérant avec deux surfaces de contact correspondantes définies sur ladite lame, de part et d'autre dudit pion.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 illustre, de façon schématique, une poussette pliante selon l'invention ;
- les figures 2A et 2B présentent, en éclaté, les deux éléments d'articulation de la poignée de la poussette de la figure 1, selon l'invention ;
- la figure 3 présente, en coupe, l'élément d'articulation de la figure 2A, ainsi qu'une partie de la poignée ;
- la figure 4 présente, en éclaté, les moyens de commande du déverrouillage montés sur la poignée de la poussette de la figure 1 ;
- la figure 5 illustre, également en éclaté, les moyens de verrouillage et de déverrouillage de la poussette de la figure 1, actionnés par la commande de la figure 4.

Comme indiqué précédemment, la poussette de l'invention combine les deux caractéristiques suivantes :
- poignée articulée, permettant le réglage de son positionnement en hauteur par rapport au sol ;
- déverrouillage par câbles des moyens de pliage, permettant une commande déportée au niveau de la poignée.

Ce résultat est obtenu en maintenant constante la longueur du chemin de câble, quelle que soit la position de la poignée. Cela peut notamment être obtenu en faisant passer ce câble au niveau de l'axe de pivotement des moyens d'articulation, comme cela apparaîtra plus clairement par la suite.

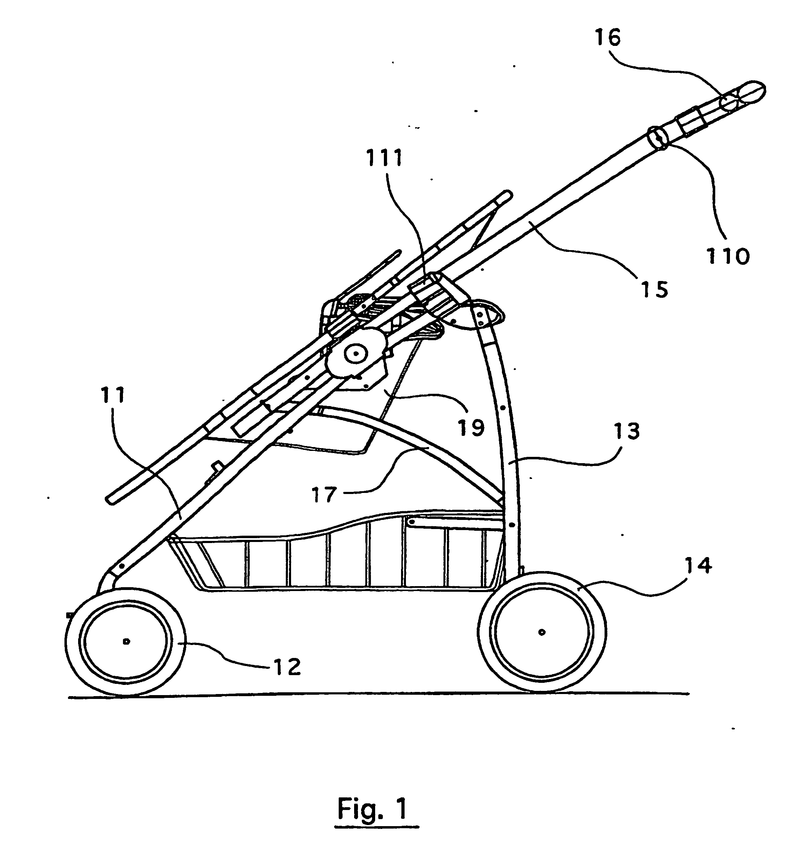

La figure 1 illustre un mode de réalisation d'une poussette selon l'invention. Cette poussette est vue de côté. Il est clair que l'autre côté de la poussette est totalement symétrique.

La poussette comprend un châssis formé notamment, pour le côté illustré, d'un piètement avant (11), portant une ou plusieurs roues avant (12), d'un piètement arrière (13), portant une ou plusieurs roues arrière (14) et un bras-poussoir (15), se prolongeant par une poignée (16) (qui relie les deux bras-poussoirs).

Une traverse (17) maintient le piètement arrière (13) en position par rapport au piètement avant (11). Lors du pliage, le piètement arrière (13) est ramené parallèle au piètement avant (11). Par ailleurs, toujours lors du pliage, le bras-poussoir (15) coulisse le long du piètement avant (11) ou, le cas échéant, à l'intérieur de ce dernier. Selon un autre mode de réalisation, le bras-poussoir (15) peut être replié et ramené le long du piètement avant (11).

Plus généralement, l'invention peut être mise en oeuvre avec de nombreux types de châssis de poussette, quel que soit leur mode de pliage, dès lors que des moyens de commande du pliage sont compris sur la poignée. Normalement, le châssis peut être du type à pliage à plat (tel que décrit par exemple dans FR 2 607 770) ou du type à châssis en "X, dans lequel des croisillons permettent aux deux parties latérales de se rapprocher l'une de l'autre, lors du pliage (tel que décrit par exemple dans FR 2 693 162).

Ce châssis comprend encore des moyens de réception d'un hamac (19), qui peut avantageusement prendre plusieurs positions par rapport à ce châssis.

Selon l'invention, la poignée (16) est articulée par rapport au bras-poussoir (15), à l'aide de moyens d'articulation (110) décrits plus précisément par la suite. Un bouton de commande monté sur la poignée (16) permet d'agir sur l'élément de liaison (111) pour obtenir le pliage, comme cela est décrit plus précisément par la suite.

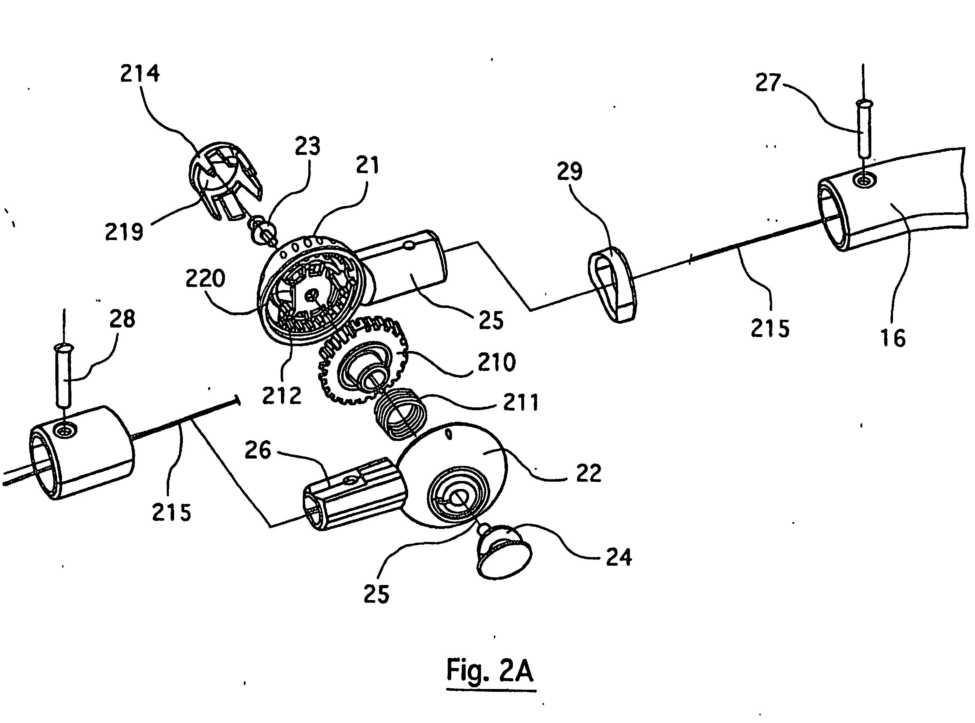

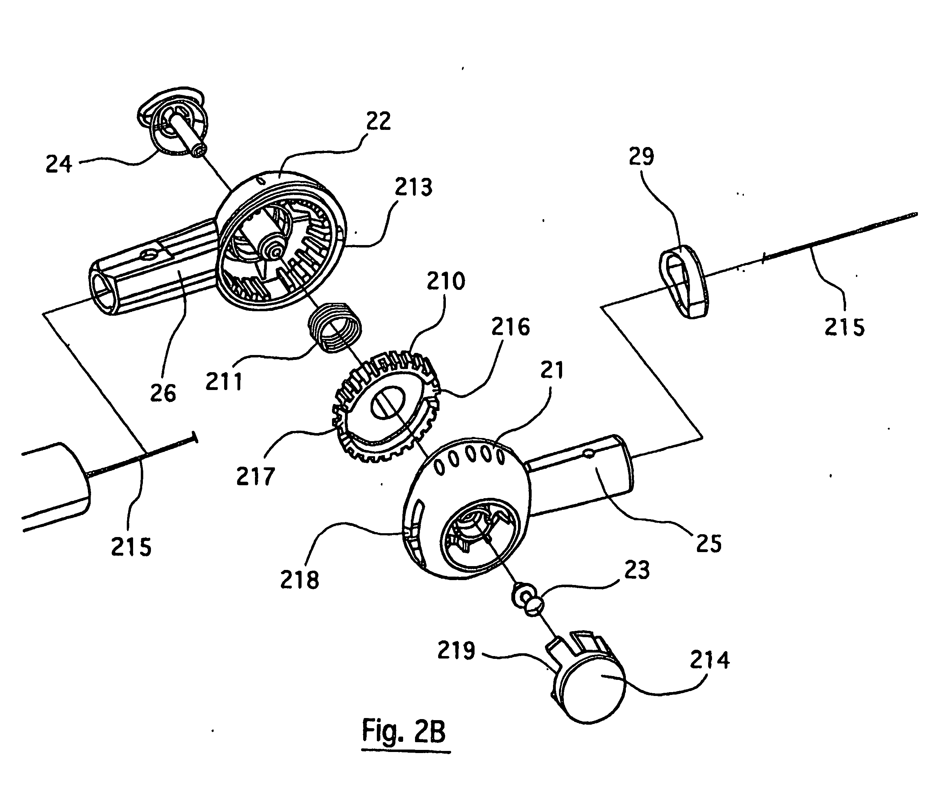

Les figures 2A et 2B illustrent, en éclaté, les éléments d'articulation (côté droit et côté gauche respectivement, vus par l'utilisateur poussant la poussette) de la poussette de la figure 1. Ces deux éléments d'articulation sont identiques. Les deux figures permettent de voir l'intégralité de leurs forme et structure.

Ils comprennent donc deux demi-coquilles (21 et 22), prévues pour être maintenues l'une contre l'autre par des moyens de fixation mâle (23) et femelle (24). Il peut également s'agir d'un boulon ou d'un rivet. Ces moyens de fixation (23 et 24) définissent l'axe (225) de pivotement ou d'articulation.

Chacune des demi-coquilles présente un prolongement (25, 26) destiné à coopérer respectivement avec la poignée (16) et le bras-poussoir (15), pour assurer la solidarisation de l'ensemble. Ces prolongements peuvent par exemple pénétrer à l'intérieur du bras-poussoir et de la poignée. Ils sont alors maintenus en position de façon définitive à l'aide d'un rivet (27, 28) ou d'un système de fixation similaire. Une bague intermédiaire (29) qui épouse la forme des demi-coquilles (21, 22), peut être prévue, notamment pour des raisons esthétiques et de finition, sur l'un et/ou l'autre des prolongements.

A l'intérieur de chaque élément d'articulation, on trouve une roue dentée (210) maintenue en position de travail à l'intérieur des deux demi-coquilles (21 et 22) par un ressort (211). Dans cette position de travail, la roue dentée (210) coopère avec des moyens d'engrenage correspondants (212, 213) des deux demi-coquilles. Ainsi, la position d'inclinaison de la poignée (16) est fixe.

Pour permettre la modification de cette inclinaison, un bouton (214) est prévu. Ce bouton, mobile selon l'axe d'articulation (225), dégage, lorsqu'on applique une force dessus, la roue dentée (210) des moyens d'engrenage (212) de la demi-coquille (21). Les deux demi-coquilles (21 et 22) sont alors libres l'une par rapport à l'autre. La position de la poignée (16) par rapport au bras-poussoir (15) peut alors être modifiée.

Dès que l'on cesse d'appliquer une force sur le bouton (214), celui-ci reprend sa position initiale, de même que la roue dentée (210), sous l'action du ressort (211).

Selon l'invention, les pièces constitutives des articulations ont été adaptées pour permettre le passage du câble de commande (215). Ainsi, ce câble (215) coupe l'axe d'articulation (225), quelle que soit la position d'articulation de la poignée. La distance entre les deux extrémités du câbles reste donc constante, quelle que soit la position de la poignée (16).

Ces adaptations comprennent notamment la réalisation d'encoches adaptées (216 et 217) dans la roue dentée, d'ouverture (219) dans le bouton (214), d'une ouverture (218) dans la demi-coquille (21), d'un passage (220) à l'intérieur de cette demi-coquille,...

Ces différents passages et ouvertures sont configurés de façon à ne pas entraver le cheminement du câble, entre les deux positions extrêmes, prévu pour la poignée (16). Ils peuvent d'ailleurs permettre de définir ces positions extrêmes.

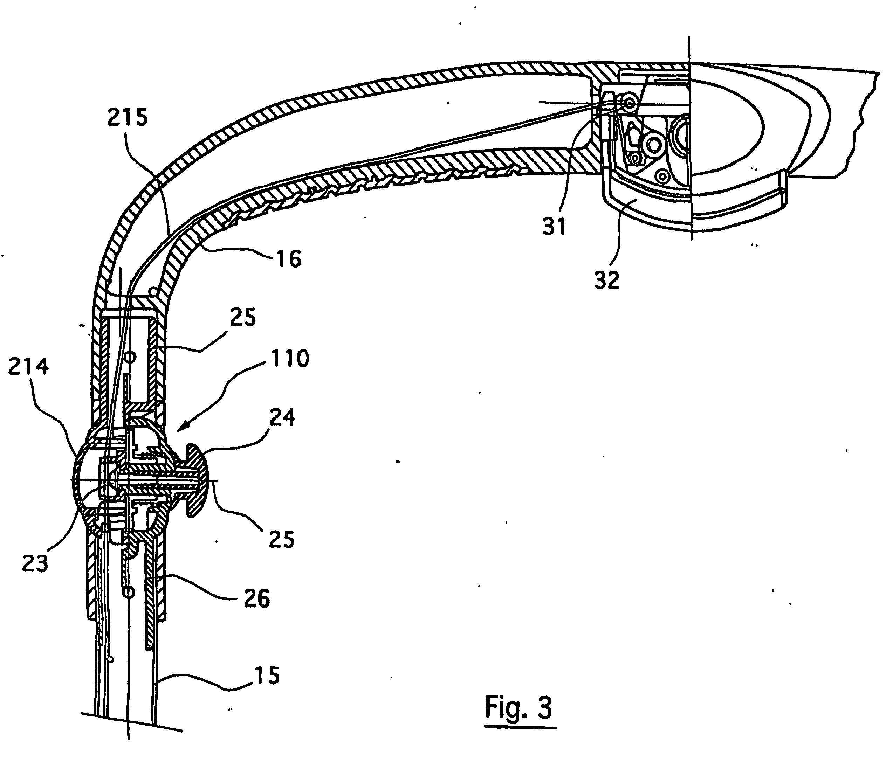

Le cheminement du câble (215) apparaît sur la vue en coupe de la figure 3. Une des extrémités (31) du câble est fixée à la poignée de commande (32), dont le fonctionnement est décrit plus en détail par la suite. Le câble (215) est guidé, à l'intérieur de la poignée (16), puis de l'élément d'articulation (110) vers le bord intérieur du bras-poussoir (15), ou en d'autres termes vers l'extérieur de la poussette. On ouvre ainsi le plus possible les angles formés par le câble (215) (l'angle n'est jamais inférieur à 90°), et on fait circuler le câble au-delà des moyens de fixation (23, 24). En d'autres termes, le câble (215) coupe l'axe d'articulation (225) sans problème, puisqu'il passe au-delà des moyens de fixation (23, 24).

On constate sur cette figure 3 que les ouvertures, permettant la libre circulation du câble (215), tiennent compte non seulement du déplacement dû à la modification de l'inclinaison, mais également du déplacement transversal de certaines pièces, tel que le bouton (214).

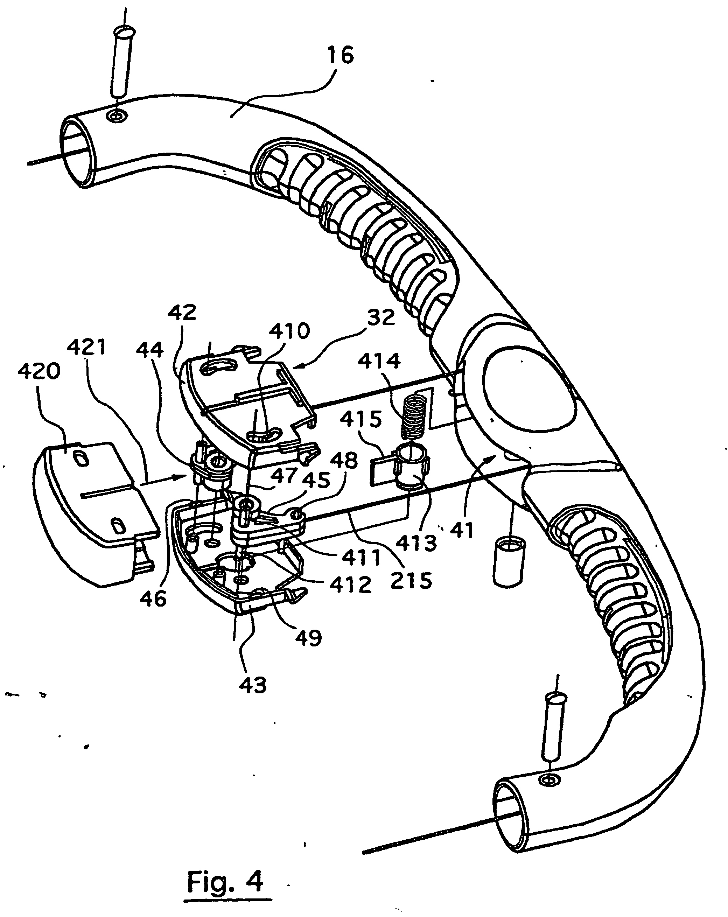

La figure 4 illustre un mode de réalisation avantageux du bouton de la commande de déverrouillage monté sur la poignée (16) et attenant les câbles (215). D'autres types de commande sont également connus, et peuvent bien sûr être mis en oeuvre dans le cadre de l'invention.

Ce bouton de commande comprend un boîtier (32) est conçu pour venir s'encastrer dans un logement (41) prévu à cet effet dans la poignée (16). Il est formé de deux demi-boites (42 et 43). Une manette (420) recouvre le boîtier (32), et est mobile par rapport à ce dernier, selon la direction (421).

Le mécanisme comprend deux biellettes (44 et 45) montées mobiles en rotation autour des axes (46 et 47). Une extrémité de ces biellettes (48) maintient l'extrémité du câble (215). Le mouvement de ces biellettes est défini par des trous oblongs (49, 410) formés dans les deux demi-boites (42 et 43) et qui coopèrent avec des pions (411, 412) formés sur les biellettes.

Ainsi, lorsque l'on agit sur le boîtier (32), les biellettes, guidées par les trous oblongs, tirent sur les câbles (215), ce qui a pour effet d'assurer le déverrouillage.

Une sécurité est prévue, qui empêche d'actionner, de façon involontaire, la commande. Il s'agit d'un bouton de sécurité (413) placé à l'intérieur du boîtier (32), et accessible sous la poignée (16). En position normale, le bouton de sécurité (413) est maintenu par le ressort (414), de façon que le prolongement (415) du bouton de sécurité (413) vienne buter contre les parois de la manette (420), empêchant cette dernière de pénétrer à l'intérieur du logement (41).

En revanche, lorsque l'utilisateur imprime une force suffisante sur le bouton de sécurité (413), le prolongement (415) se dégage, permettant le mouvement de la manette (420). Le ressort (414) permet le retour automatique du bouton (413) en position de sécurité.

On notera que le fait de prévoir deux axes distincts (46 et 47) pour les biellettes, et non un axe central, permet d'aménager à l'intérieur de la commande (32) de tels moyens de sécurité (413), d'une façon simple et efficace.

Les câbles de déverrouillage (215) peuvent agir sur de très nombreux types de moyens de verrouillage, fonction en particulier des moyens de pliage mis en oeuvre. Selon un mode de réalisation avantageux, les moyens de verrouillage comprennent un pion coopérant avec un élément de réception ménagé sur le piètement, ou sur une pièce solidaire de ce dernier. L'actionnement du câble a alors pour fonction de commander la rétractation du pion à l'intérieur du bras-poussoir.

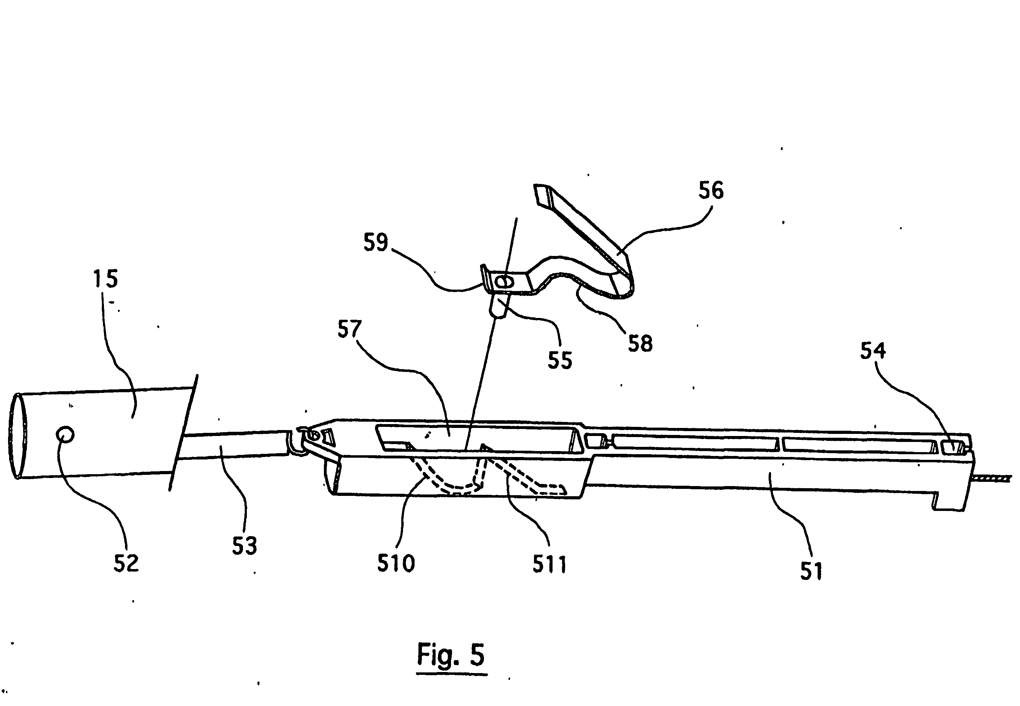

Un mode de réalisation d'un tel système de verrouillage est illustré en figure 5. Bien sûr, l'invention peut être mise en oeuvre avec tout autre type de verrouillage.

Dans le système de la figure 5, on a prévu une pièce (51), par exemple en matière plastique, qui est placée à l'intérieur du bras-poussoir, et dont l'une des extrémités est solidarisée à l'extrémité inférieure du bras-poussoir, par un rivet traversant (52), par l'intermédiaire d'un moyen de rappel (53).

L'autre extrémité de la pièce (51) reçoit la seconde extrémité (54) du câble (215).

Le pion de verrouillage (55) est monté sur une lame (56) repliée de façon à former un ressort à l'intérieur du bras-poussoir. Sous l'effet de la force de rappel correspondante, le pion (55) est repoussé vers l'extérieur de la pièce (51) et du bras-poussoir (15), de façon à assurer le verrouillage, au travers d'ouvertures prévues à cet effet. La lame (56) est placée à l'intérieur d'un logement (57), qui assure son bon positionnement, et son guidage lors du déverrouillage.

Lorsque l'on agit sur le câble (215), la pièce (51) est ramenée vers le haut (luttant contre la force imprimée par le moyen de rappel (53)). A l'intérieur du logement (57), la lame (56) ne peut pas suivre le mouvement imprimé à la pièce (51), puisque le pion (55) la solidarise au bras-poussoir (15). Les deux surfaces de contact (58) et (59) coopèrent avec les deux plans inclinés de guidage (510 et 511) ménagés à l'intérieur du logement (57).

En suivant le déplacement dicté par ces plans inclinés (510 et 511), sous l'effet de la traction du câble (215), le pion (55) se rétracte à l'intérieur du logement (57), ce qui permet le pliage.

Cette configuration à double plan incliné, de chaque côté du pion, permet un déplacement précis et efficace, le pion restant en permanence perpendiculaire (ou pratiquement perpendiculaire) au bras-poussoir.

## Revendications (Revendications pour l'(les) Etat(s) contractant(s) suivant(s): BE, CY, DK, ES, FI, FR, GB, GR, IE, IT, LU, MC, PT, SE.)

1. Poussette pliante, du type comprenant un châssis comprenant notamment deux piètements avant (11), deux piètements arrière (13) et une poignée de guidage (16) montée sur deux éléments de liaison (15) s'étendant sensiblement dans le prolongement desdits piètements avant (11), et étant mobiles par rapport à ces derniers, entre une position dépliée et une position pliée,
ladite poignée (16) comprenant des moyens de déverrouillage (420) actionnant au moins un câble de déverrouillage (215) circulant dans ladite poignée et dans au moins un desdits éléments de liaison, et assurant le déverrouillage d'au moins un élément de verrouillage (55) de châssis, de façon à permettre le passage de ladite position dépliée à ladite position pliée,
**caractérisée en ce que** ladite poignée (16) est articulée par rapport auxdits éléments de liaison (15), par l'intermédiaire de deux éléments d'articulation (110),
le ou lesdits cables de déverrouillage (215) étant guidés au travers desdits éléments d'articulation (110), de façon que, pour chacun desdits câbles de déverrouillage, la distance entre des premiers moyens d'accrochage (48) d'une première extrémité du dudit câble auxdits moyens de déverrouillage et des second moyens d'accrochage (54) de la seconde extrémité dudit câble auxdits moyens de déverrouillage de châssis, soit constante, quelle que soit la position d'inclinaison de ladite poignée.

2. Poussette pliante sur la revendication 1, **caractérisée en ce que** chacun desdits câbles de déverrouillage (215) coupe l'axe de pivotement (25) de l'élément d'articulation (110) correspondant, quelle que soit la position de ce dernier.

3. Poussette pliante selon l'une quelconque des revendications 1 et 2, **caractérisée en ce que** chacun desdits câbles de déverrouillage (215) est guidé, à l'intérieur de l'élément de liaison, vers l'extérieur de ladite poussette.

4. Poussette pliante selon l'une quelconque des revendications 2 et 3, **caractérisée en ce que** chacun desdits éléments d'articulation (110) comprend deux pièces (21, 22) solidaires respectivement de ladite poignée et d'un desdits éléments de liaison, et un bouton de commande (214) monté selon ledit axe de pivotement (25) et pouvant prendre deux positions extrêmes sur ledit axe de pivotement :
- une position de repos, prise par défaut, dans laquelle lesdites pièces de l'élément d'articulation sont solidarisées l'une à l'autre ; et
- une position de réglage, dans laquelles lesdites pièces de l'élément d'articulation sont libres l'une par rapport à l'autre, de façon à permettre la modification de l'inclinaison de ladite poignée,
deux ouvertures (219) étant ménagées dans ledit bouton de commande, de façon que ledit câble de déverrouillage circule librement au niveau dudit axe de pivotement, quelle que soit la position dudit bouton de commande.

5. Poussette pliante selon l'une quelconque des revendications 1 à 4, **caractérisée en ce que** lesdits moyens de déverrouillage comprennent un bouton central (420), agissant sur deux biellettes symétriques (43, 44), de façon à tirer lesdits câbles de déverrouillage (215) lorsqu'on actionne ledit bouton central (420).

6. Poussette pliante selon la revendication 5, **caractérisée en ce que** lesdites biellettes (43, 44) pivotent autour d'axes distincts.

7. Poussette pliante selon l'une quelconque des revendications 5 et 6, **caractérisée en ce que** le déplacement de chacune desdites biellettes (43) est guidé par un pion (411) solidaire de ladite biellette et circulant dans une ouverture ou une rainure (410) fixe par rapport à ladite poignée.

8. Poussette pliante selon l'une quelconque des revendications 1 à 7, **caractérisée en ce que** lesdits moyens de verrouillage comprennent au moins un pion de verrouillage (55) monté dans un desdits éléments de liaison (15), et coopérant avec une encoche correspondante ménagée dans un desdits piétements avant (11),
ledit pion (55) étant monté de façon qu'il se rétracte à l'intérieur dudit élément de liaison (15) lorsque l'on tire sur le câble de déverrouillage (215) correspondant, de façon à permettre le coulissement dudit élément de liaison (15) à l'intérieur dudit piétement avant (11).

9. Poussette pliante selon la revendication 8, **caractérisée en ce que** ledit pion (55) est monté sur une lame (56) logée dans un logement (57) d'une pièce pouvant coulisser à l'intérieur dudit élément de liaison, et dont l'une des extrémités est solidarisée à l'extrémité inférieure dudit élément de liaison par l'intermédiaire de moyens de rappel, et dont l'autre extrémité est solidaire dudit câble de déverrouillage,
ledit logement étant conformé de façon que :
- en position de repos du cable de déverrouillage, ledit pion tend à coopérer avec l'encoche correspondante ;
- lorsqu'on agit sur le cable de déverrouillage, la lame portant ledit pion est guidée vers l'intérieur de l'élément de liaison, entraînant ledit pion et permettant ainsi le déverrouillage.

10. Poussette pliante selon la revendication 9, **caractérisée en ce que** ladite lame (55) est repliée sur elle-même, et forme des moyens de rappel tendant à ramener ledit pion (55) en position de verrouillage.

11. Poussette pliante selon l'une quelconque des revendications 9 et 10, **caractérisée en ce que** ledit logement (57) présente deux plans inclinés (510, 511) de guidage, coopérant avec deux surfaces de contact (58, 59) correspondantes définies sur ladite lame, de part et d'autre dudit pion.

12. Poussette pliante selon l'une quelconque des revendications 1 à 11, **caractérisée en ce que** le châssis est pliable selon une des techniques appartenant au groupe comprenant :
- le pliage à plat ;
- le pliage en "X", mettant en oeuvre des croisillons pour que les deux parties latérales se rapprochent l'une de l'autre.

## Revendications (Revendications pour l'(les) Etat(s) contractant(s) suivant(s): AT, CH, LI, DE et NL.)

1. Poussette pliante, du type comprenant un châssis comprenant notamment deux piètements avant (11), deux piètements arrière (13) et une poignée de guidage (16) montée sur deux éléments de liaison (15) s'étendant sensiblement dans le prolongement desdits piétements avant (11), et étant mobiles par rapport à ces derniers, entre une position dépliée et une position pliée,
ladite poignée (16) comprenant des moyens de déverrouillage (420) actionnant au moins un câble de déverrouillage (215) circulant dans ladite poignée et dans au moins un desdits éléments de liaison, et assurant le déverrouillage d'au moins un élément de verrouillage (55) de châssis, de façon à permettre le passage de ladite position dépliée à ladite position pliée,
ladite poignée (16) étant articulée par rapport auxdits éléments de liaison (15), par l'intermédiaire de deux éléments d'articulation (110), le ou lesdits câbles de déverrouillage (215) étant guidés au travers desdits éléments d'articulation (110), et coupant l'axe de pivotement (25) de l'élément d'articulation (110) correspondant, de façon sensiblement perpendiculaire audit axe de pivotement (25), quelle que soit la position de ce dernier,
de façon que, pour chacun desdits câbles de déverrouillage, la distance entre des premiers moyens d'accrochage (48) d'une première extrémité du dudit câble auxdits moyens de déverrouillage et des second moyens d'accrochage (54) de la seconde extrémité dudit câble auxdits moyens de déverrouillage de châssis, soit constante, quelle que soit la position d'inclinaison de ladite poignée.

2. Poussette pliante sur la revendication 1, dans laquelle chacun desdits câbles de déverrouillage (215) est guidé, à l'intérieur de l'élément de liaison, vers l'extérieur de ladite poussette.

3. Poussette pliante selon l'une quelconque des revendications 1 et 2, dans laquelle chacun desdits éléments d'articulation (110) comprend deux pièces (21, 22) solidaires respectivement de ladite poignée et d'un desdits éléments de liaison, et un bouton de commande (214) monté selon ledit axe de pivotement (25) et pouvant prendre deux positions extrêmes sur ledit axe de pivotement :
- une position de repos, prise par défaut, dans laquelle lesdites pièces de l'élément d'articulation sont solidarisées l'une à l'autre ; et
- une position de réglage, dans laquelle lesdites pièces de l'élément d'articulation sont libres l'une par rapport à l'autre, de façon à permettre la modification de l'inclinaison de ladite poignée,
deux ouvertures (219) étant ménagées dans ledit bouton de commande, de façon que ledit câble de déverrouillage circule librement au niveau dudit axe de pivotement, quelle que soit la position dudit bouton de commande.

4. Poussette pliante selon l'une quelconque des revendications 1 à 3, dans laquelle lesdits moyens de déverrouillage comprennent un bouton central (420), agissant sur deux biellettes symétriques (43, 44), de façon à tirer lesdits câbles de déverrouillage (215) lorsqu'on actionne ledit bouton central (420).

5. Poussette pliante selon la revendication 4, dans laquelle lesdites biellettes (43,44) pivotent autour d'axes distincts.

6. Poussette pliante selon l'une quelconque des revendications 4 et 5, dans laquelle le déplacement de chacune desdites biellettes (43) est guidé par un pion (411) solidaire de ladite biellette et circulant dans une ouverture ou une rainure (410) fixe par rapport à ladite poignée.

7. Poussette pliante selon l'une quelconque des revendications 1 à 6, dans laquelle lesdits moyens de verrouillage comprennent au moins un pion de verrouillage (55) monté dans un desdits éléments de liaison (15), et coopérant avec une encoche correspondante ménagée dans un desdits piétements avant (11),
ledit pion (55) étant monté de façon qu'il se rétracte à l'intérieur dudit élément de liaison (15) lorsque l'on tire sur le câble de déverrouillage (215) correspondant, de façon à permettre le coulissement dudit élément de liaison (15) à l'intérieur dudit piétement avant (11).

8. Poussette pliante selon la revendication 7, dans laquelle ledit pion (55) est monté sur une lame (56) logée dans un logement (57) d'une pièce pouvant coulisser à l'intérieur dudit élément de liaison, et dont l'une des extrémités est solidarisée à l'extrémité inférieure dudit élément de liaison par l'intermédiaire de moyens de rappel, et dont l'autre extrémité est solidaire dudit câble de déverrouillage,
ledit logement étant conformé de façon que :
- en position de repos du cable de déverrouillage, ledit pion tend à coopérer avec l'encoche correspondante ;
- lorsqu'on agit sur le cable de déverrouillage, la lame portant ledit pion est guidée vers l'intérieur de l'élément de liaison, entraînant ledit pion et permettant ainsi le déverrouillage.

9. Poussette pliante selon la revendication 8, dans laquelle ladite lame (55) est repliée sur elle-même, et forme des moyens de rappel tendant à ramener ledit pion (55) en position de verrouillage.

10. Poussette pliante selon l'une quelconque des revendications 8 et 9, dans laquelle ledit logement (57) présente deux plans inclinés (510, 511) de guidage, coopérant avec deux surfaces de contact (58, 59) correspondantes définies sur ladite lame, de part et d'autre dudit pion.

11. Poussette pliante selon l'une quelconque des revendications 1 à 10, dans laquelle le châssis est pliable selon une des techniques appartenant au groupe comprenant :
- le pliage à plat ;
- le pliage en "X", mettant en oeuvre des croisillons pour que les deux parties latérales se rapprochent l'une de l'autre.

## Patentansprüche (Patentansprüche für folgende(n) Vertragsstaat(en): BE, CY, DK, ES, FI, FR, GB, GR, IE, IT, LU, MC, PT, SE.)

1. Zusammenklappbarer Kinderwagen mit einem Rahmen, der insbesondere zwei vordere Beine (11), zwei hintere Beine (13) und einen auf zwei Verbindungselementen (15) angebrachten Führungsgriff (16) aufweist, wobei diese Verbindungselemente (15) sich in etwa in der Längsrichtung der vorderen Beine (11) erstrecken und ihnen gegenüber zwischen einer entfalteten und einer zusammengefalteten Position beweglich sind,
wobei der Griff (16) über Verriegelungsmittel (420) zum Betätigen von mindestens einem durch den erwähnten Griff und durch mindestens eines der Verbindungselemente laufenden Entriegelungsseil (215) verfügt, welches das Entriegeln von mindestens einem Verriegelungselement (55) des Rahmens sicherstellt, wodurch der Übergang von der zusammengefalteten in die entfaltete Position ermöglicht wird,
**dadurch gekennzeichnet, dass** der Griff (16) gegenüber den Verbindungselementen (15) über zwei Gelenkteile (110) schwenkbar angebracht ist,
wobei das oder die Entriegelungsseile (215) durch die Gelenkteile (110) geführt werden, so dass für jedes dieser Entriegelungsseile der Abstand zwischen ersten Mitteln zum Einhängen (48) eines ersten Endes des Seils an die Entriegelungsmittel und zweiten Mitteln zum Einhängen (54) des zweiten Endes des Seils an die Entriegelungsmittel des Rahmens konstant ist, unabhängig von der Neigung des Griffs.

2. Zusammenklappbarer Kinderwagen nach Anspruch 1,
**dadurch gekennzeichnet, dass** jedes der Entriegelungsseile (215) die Drehachse (25) des entsprechenden Gelenkteils (110) unabhängig von ihrer Lage schneidet

3. Zusammenklappbarer Kinderwagen nach einem der Ansprüche 1 oder 2,
**dadurch gekennzeichnet, dass** jedes der erwähnten Entnegeiungsseiie (215) innerhalb des Verbindungselementes zum Äußeren des Kinderwagens geführt wird.

4. Zusammenklappbarer Kinderwagen nach einem der Ansprüche 2 oder 3,
**dadurch gekennzeichnet, dass** jedes der Gelenkteile (110) zwei jeweils mit dem Griff und einem der Verbindungselemente verbundene Teile (21, 22) umfasst, sowie einen Steuerungsknopf (214), der nach der Gelenkachse (25) angebracht ist und zwei extreme Lagen auf dieser Achse einnehmen kann:
- eine als Standardlage betrachtete Ruhelage, bei der die Teile des Gelenkteiles miteinander verbunden sind, und
- eine Einstellposition, bei der die Teile des Gelenkteiles gegeneinander frei sind, so dass die Neigung des Griffes geändert werden kann,
wobei zwei Öffnungen (219) in dem Steuerungsknopf angebracht sind, um den freien Lauf des Entriegelurigsseils auf der Höhe der Gelenkachse unabhängig von der Lage des Steuerungsknopfes zu gewährleisten.

5. Zusammenklappbarer Kinderwagen nach einem der Ansprüche 1 bis 4,
**dadurch gekennzeichnet, dass** die Entriegelungsmittel einen mittleren Knopf (420) umfassen, der auf zwei symmetrische Schwingarme (43, 44) wirkt, um auf die Entriegelungsseile (215) beim Betätigen des mittleren Knopfes (420) einen Zug auszuüben.

6. Zusammenklappbarer Kinderwagen nach Anspruch 5,
**dadurch gekennzeichnet, dass** die Schwingarme (43, 44) sich um verschiedene Achsen drehen.

7. Zusammenklappbarer Kinderwagen nach einem der Ansprüche 5 oder 6,
**dadurch gekennzeichnet, dass** die Bewegung eines jeden dieser Schwingarme (43) von einem mit diesem Schwingarm verbundenen Zapfen (411) geführt wird, der in einer im Verhältnis zum Griff feststehenden Öffnung oder Rille (410) läuft.

8. Zusammenklappbarer Kinderwagen nach einem der Ansprüche 1 bis 7,
**dadurch gekennzeichnet, dass** die Verriegelungsmittel mindestens einen in einem der Verbindungselemente (15) angebrachten Verriegelungszapfen (55) umfassen, der mit einer entsprechenden, in einem der vorderen Beine (11) vorgesehenen Rille zusammenwirkt,
wobei der Zapfen (55) so angebracht ist, dass er sich in das Innere des Verbindungselementes (15) zurückzieht, wenn das entsprechende Entriegelungsseil (215) gezogen wird, um das Gleiten des Verbindungselementes (15) innerhalb des vorderen Beines (11) zu ermöglichen.

9. Zusammenklappbarer Kinderwagen nach Anspruch 8,
**dadurch gekennzeichnet, dass** der Zapfen (55) auf einer in einer Aussparung (57) eines Teiles befindlichen Federlamelle (56) angebracht ist, wobei dieses Teil im Inneren des Verbindungselementes gleiten kann, deren eines Ende mit dem unteren Ende des Verbindungselementes über Rückholmittel verbunden ist und deren anderes Ende mit dem Entriegelungsseil verbunden ist,
wobei die Aussparung so ausgebildet ist, dass:
- in der Ruhelage des Seils der Zapfen dazu neigt, mit der entsprechenden Nut zusammenzuwirken.
- wenn das Entriegelungsseil betätigt wird, die den Zapfen tragende Federlamelle zum Inneren des Verbindungselementes hin geführt wird, wobei sie den Zapfen mitnimmt und somit das Entriegeln ermöglicht.

10. Zusammenklappbarer Kinderwagen nach Anspruch 9.
**dadurch gekennzeichnet, dass** die Federlamelle (55) auf sich selbst zusammengefaltet ist,
wobei sie Rückholmittel bildet, welche die Tendenz aufweisen, den Zapfen (55) in die Verriegelungsposition zurockzuholen.

11. Zusammenklappbarer Kinderwagen nach einem der Ansprüche 9 oder 10,
**dadurch gekennzeichnet, dass** die Aussparung (57) zwei geneigte Führungsebenen (510, 511) aufweist, die mit zwei auf der Federlamelle, auf beiden Seiten des Zapfens ausgebildeten, entsprechenden Berührungsflächen (58, 59) zusammenwirken.

12. Zusammenklappbarer Kinderwagen nach einem der Ansprüche 1 bis 11,
**dadurch gekennzeichnet, dass** der Rahmen nach einer der folgenden Techniken zusammenklappbar ist
- das flache Zusammenlegen,
- das Zusammenlegen in "X"-Form, wobei für die Seitenteile zusammenführende Kreuzstreben zum Einsatz kommen.

## Patentansprüche (Patentansprüche für folgende(n) Vertragsstaat(en): AT, CH, LI, DE, NL.)

1. Zusammenklappbarer Kinderwagen mit einem Rahmen, der insbesondere zwei vordere Beine (11), zwei hintere Beine (13) und einen auf zwei Verbindungselementen (15) angebrachten Führungsgriff (16) aufweist, wobei diese Verbindungselemente (15) sich in etwa in der Längsrichtung der vorderen Beine (11) erstrecken und ihnen gegenüber zwischen einer entfalteten und einer zusammengefalteten Position beweglich sind,
wobei der Griff (16) Ober Verriegelungsmittel (420) zum Betätigen von mindestens einem durch den erwähnten Griff und durch mindestens eines der Verbindungselemente laufenden Entriegelungsseil (215) verfügt, welches das Entriegeln von mindestens einem Verriegelungselement (55) des Rahmens sicherstellt, wodurch der Übergang von der zusammengefalteten in die entfaltete Position ermöglicht wird,
wobei der Griff (16) gegenüber den Verbindungselementen (15) über zwei Gelenkteile (110) schwenkbar angebracht ist,
wobei das oder die Entriegelungsselle (215) durch die Gelenkteile (110) geführt werden und die Drehachse (25) des entsprechenden Gelenkteils (110) in etwa senkrecht zur besagten Drehachse (25) unabhängig von ihrer Lage schneiden,
so dass für jedes dieser Entriegelungsseile der Abstand zwischen ersten Mitteln zum Einhängen (48) eines ersten Endes des Seils an die Entriegelungsmittel und zweiten Mitteln zum Einhängen (54) des zweiten Endes des Seils an die Entriegelungsmittel des Rahmens konstant ist unabhängig von der Neigung des Griffs.

2. Zusammenklappbarer Kinderwagen nach Anspruch 1,
bei dem jedes der erwähnten Entriegelungsseile (215) innerhalb des Verbindungselementes zum Äußeren des Kinderwagens geführt wird.

3. Zusammenklappbarer Kinderwagen nach einem der Ansprüche 1 oder 2,
bei dem jedes der Gelenkteile (110) zwei jeweils mit dem Gritt und einem der Verbindungselemente verbundene Teile (21, 22) umfasst, sowie einen Steuerungsknopf (214), der nach der Gelenkachse (25) angebracht ist und zwei extreme Lagen auf dieser Achse einnehmen kann:
- eine als Standardlage betrachtete Ruhelage, bei der die Teile des Gelenkteiles miteinander verbunden sind, und
- eine Einstellposition, bei der die Teile des Gelenkteiles gegeneinander frei sind, so dass die Neigung des Griffes geändert werden kann,
wobei zwei Öffnungen (219) in dem Steuerungsknopf angebracht sind, um den freien Lauf des Entriegelungsseils auf der Höhe der Gelenkachse unabhängig von der Lage des Steuerungsknopfes zu gewährleisten.

4. Zusammenklappbarer Kinderwagen nach einem der Ansprüche 1 bis 3,
bei dem die Entriegelungsmittel einen mittleren Knopf (420) umfassen, der auf zwei symmetrische Schwingarme (43, 44) wirkt, um auf die Entriegelungsseile (215) beim Betätigen des mittleren Knopfes (420) einen Zug auszuüben.

5. Zusammenklappbarer Kinderwagen nach Anspruch 4,
bei dem die Schwingarme (43. 44) sich um verschiedene Achsen drehen.

6. Zusammenklappbarer Kinderwagen nach einem der Ansprüche 4 oder 5,
bei dem die Bewegung eines jeden dieser Schwingarme (43) von einem mit diesem Schwingarm verbundenen Zapfen (411) geführt wird, der in einer im Verhältnis zum Griff feststehenden Öffnung oder Rille (410) läuft.

7. Zusammenklappbarer Kinderwagen nach einem der Ansprüche 1 bis 6.
bei dem die Verriegelungsmittel mindestens einen in einem der Verbindungselemente (15) angebrachten Verriegelungszapfen (55) umfassen, der mit einer entsprechenden, in einem der vorderen Beine (11) vorgesehenen Rille zusammenwirkt,
wobei der Zapfen (55) so angebracht ist, dass er sich in das Innere des Verbindungselementes (15) zurückzieht, wenn das entsprechende Entriegefungsseil (215) gezogen wird, um das Gleiten des Verbindungselementes (15) innerhalb des vorderen Beines (11) zu ermöglichen.

8. Zusammenklappbarer Kinderwagen nach Anspruch 7,
bei dem der Zapfen (55) auf einer in einer Aussparung (57) eines Teiles befindlichen Federlamelle (56) angebracht ist, wobei dieses Teil im inneren des Verbindungselementes gleiten kann, deren eines Ende mit dem unteren Ende des Verbindungselementes über Rückholmittel verbunden ist und deren anderes Ende mit dem Entriegelungsseil verbunden ist,
wobei die Aussparung so ausgebildet ist, dass:
- in der Ruhelage des Seils der Zapfen dazu neigt, mit der entsprechenden Nut zusammenzuwirken,
- wenn das Entriegelungsseil betätigt wird, die den Zapfen tragende Federlamelle zum Inneren des Verbindungselementes hin geführt wird, wobei sie den Zapfen mitnimmt und somit das Entriegeln ermöglicht.

9. Zusammenklappbarer Kinderwagen nach Anspruche 8,
bei dem die Federlamelle (55) auf sich selbst zusammengefaltet ist, wobei sie Rückholmittel bildet, welche die Tendenz aufweisen, den Zapfen (55) in die Verriegelungsposition zurückzuholen.

10. Zusammenklappbarer Kinderwagen nach einem der Ansprüche 8 oder 9,
bei dem die Aussparung (57) zwei geneigte Führungsebenen (510, 511) aufweist, die mit zwei auf der Federlamelle, auf beiden Seiten des Zapfens ausgebildeten, entsprechenden Berührungsflächen (58, 59) zusammenwirken.

11. Zusammenklappbarer Kinderwagen nach einem der Ansprüche 1 bis 10,
bei dem der Rahmen nach einer der folgenden Techniken zusammenklappbar ist
- das flache Zusammenlegen,
- das Zusammenlegen in "X"-Form, wobei für die Seitenteile zusammenführende Kreuzstreben zum Einsatz kommen.

## Claims (Claims for the following Contracting State(s): BE, CY, DK, ES, FI, FR, GB, GR, IE, IT, LU, MC, PT, SE.)

1. Folding pushchair of the type comprising a chassis comprising, in particular, two front underframe members (11), two rear underframe members (13) and a steering handle (16) which is mounted on two linking members (15) which extend substantially in the extension of the said front underframe members (11) and are movable, in relation to the latter, between an unfolded position and a folded position,
the said handle (16) comprising unlocking means (420) activating at least one unlocking cable (215) running within the said handle and within at least one of the said linking elements, and effecting the unlocking of at least one chassis-locking element (55), in such a way as to make it possible to change over from the said unfolded position to the said folded position,
**characterised in that** the said handle (16) is articulated, in relation to the said linking elements (15), via two articulating elements (110),
the said unlocking cable or cables (215) being guided through the said articulating elements (110) in such a way that, for each of the said unlocking cables, the distance between first means (48) for coupling a first end of the said cable to the said unlocking means, and second means (54) for coupling the second end of the said cable to the said chassis-unlocking means is constant, whatever the position of inclination of the said handle.

2. Folding pushchair according to claim 1, **characterised in that** each of the said unlocking cables (215) intersects the axis of pivoting (25) of the corresponding articulating element (110), whatever the position of the latter.

3. Folding pushchair according to any of claims 1 and 2,
**characterised in that** each of the said unlocking cables (215) is guided, inside the linking element, towards the outside of the said pushchair.

4. Folding pushchair according to any of claims 2 and 3,
**characterised in that** each of the said articulating elements (110) comprises two pieces (21, 22) which are interlinked, respectively, with the said handle and with one of the said linking elements, and a control button (214) which is mounted along the said axis of pivoting (25) and is capable of adopting two end positions on the said axis of pivoting:
- a rest position which is adopted by default and in which the said pieces of the articulating element are interlinked with one another; and
- an adjusting position in which the said pieces of the articulating element are free in relation to one another, in such a way as to permit the inclination of the said handle to be changed,
two apertures (219) being formed in the said control button, in such a way that the said unlocking cable runs freely at the level of the said axis of pivoting, whatever the position of the said control button.

5. Folding pushchair according to any of claims 1 to 4,
**characterised in that** the said unlocking means comprise a central button (420) which acts on two symmetrical crank-arms (43, 44) in such a way as to pull the said unlocking cables (215) when the said central button (420) is activated.

6. Folding pushchair according to claim 5, **characterised in that** the said crank-arms (43, 44) pivot about distinct axes.

7. Folding pushchair according to any of claims 5 and 6,
**characterised in that** the displacement of each of the said crank-arms (43) is guided by a peg (411) which is interlinked with the said crank-arm and runs within an aperture or a groove (410) which is fixed in relation to the said handle.

8. Folding pushchair according to any of claims 1 to 7,
**characterised in that** the said locking means comprise at least one locking peg (55) which is mounted in one of the said linking elements (15) and cooperates with a corresponding notch provided in one of the said front underframe members (11),
the said peg (55) being mounted in such a way as to be retracted inside the said linking element (15) when the corresponding unlocking cable (215) is pulled, in such a way as to permit sliding of the said linking element (15) inside the said front underframe member (11).

9. Folding pushchair according to claim 8, **characterised in that** the said peg (55) is mounted on a strip (56) accommodated in a housing (57) in a piece which is capable of sliding inside the said linking element and one of whose ends is interlinked with the lower end of the said linking element via returning means and whose other end is interlinked with the said unlocking cable, the said housing being shaped in such a way that:
- when the unlocking cable is in the rest position, the said peg tends to cooperate with the corresponding notch;
- when the unlocking cable is acted upon, the strip carrying the said peg is guided towards the inside of the linking element, carrying the said peg with it and thus permitting unlocking.

10. Folding pushchair according to claim 9, **characterised in that** the said strip (55) is folded back on itself and forms returning means which tend to bring the said peg (55) back into the locking position.

11. Folding pushchair according to any of claims 9 and 10,
**characterised in that** the said housing (57) has two inclined guide planes (510, 511) which cooperate with two corresponding contact surfaces (58, 59) defined on the said strip on either side of the said peg.

12. Folding pushchair according to any of claims 1 to 11,
**characterised in that** the chassis can be folded by one of the techniques belonging to the group comprising:
- folding flat;
- X-shaped folding, using cross-pieces to ensure that the two lateral parts draw near to one another.

## Claims (Claims for the following Contracting State(s): AT, CH, LI, DE, NL.)

1. Folding pushchair of the type comprising a chassis comprising, in particular, two front underframe members (11), two rear underframe members (13) and a steering handle (16) which is mounted on two linking members (15) which extend substantially in the extension of the said front underframe members (11) and are movable, in relation to the latter, between an unfolded position and a folded position,
the said handle (16) comprising unlocking means (420) activating at least one unlocking cable (215) running within the said handle and within at least one of the said linking elements, and effecting the unlocking of at least one chassis-locking element (55), in such a way as to make it possible to change over from the said unfolded position to the said folded position,
the said handle (16) being articulated, in relation to the said linking elements (15), via two articulating elements (110),
the said unlocking cable or cables (215) being guided through the said articulating elements (110), and intersecting the axis of pivoting (25) of the corresponding articulating element (110), in a manner substantially perpendicular to the said axis of pivoting (25), whatever the position of the latter,
in such a way that, for each of the said unlocking cables, the distance between first means (48) for coupling a first end of the said cable to the said unlocking means, and second means (54) for coupling the second end of the said cable to the said chassis-unlocking means is constant, whatever the position of inclination of the said handle.

2. Folding pushchair according to claim 1, wherein each of the said unlocking cables (215) is guided, inside the linking element, towards the outside of the said pushchair.

3. Folding pushchair according to any of claims 1 and 2, wherein each of the said articulating elements (110) comprises two pieces (21, 22) which are interlinked, respectively, with the said handle and with one of the said linking elements, and a control button (214) which is mounted along the said axis of pivoting (25) and is capable of adopting two end positions on the said axis of pivoting:
- a rest position which is adopted by default and in which the said pieces of the articulating element are interlinked with one another; and
- an adjusting position in which the said pieces of the articulating element are free in relation to one another, in such a way as to permit the inclination of the said handle to be changed,
two apertures (219) being formed in the said control button, in such a way that the said unlocking cable runs freely at the level of the said axis of pivoting, whatever the position of the said control button.

4. Folding pushchair according to any of claims 1 to 3, wherein the said unlocking means comprise a central button (420) which acts on two symmetrical crank-arms (43, 44) in such a way as to pull the said unlocking cables (215) when the said central button (420) is activated.

5. Folding pushchair according to claim 4, wherein the said crank-arms (43, 44) pivot about distinct axes.

6. Folding pushchair according to any of claims 4 and 5, wherein the displacement of each of the said crank-arms (43) is guided by a peg (411) which is interlinked with the said crank-arm and runs within an aperture or a groove (410) which is fixed in relation to the said handle.

7. Folding pushchair according to any of claims 1 to 6, wherein the said locking means comprise at least one locking peg (55) which is mounted in one of the said linking elements (15) and cooperates with a corresponding notch provided in one of the said front underframe members (11),
the said peg (55) being mounted in such a way as to be retracted inside the said linking element (15) when the corresponding unlocking cable (215) is pulled, in such a way as to permit sliding of the said linking element (15) inside the said front underframe member (11).

8. Folding pushchair according to claim 7, wherein the said peg (55) is mounted on a strip (56) accommodated in a housing (57) in a piece which is capable of sliding inside the said linking element and one of whose ends is interlinked with the lower end of the said linking element via returning means and whose other end is interlinked with the said unlocking cable,
the said housing being shaped in such a way that:
- when the unlocking cable is in the rest position, the said peg tends to cooperate with the corresponding notch;
- when the unlocking cable is acted upon, the strip carrying the said peg is guided towards the inside of the linking element, carrying the said peg with it and thus permitting unlocking.

9. Folding pushchair according to claim 8, wherein the said strip (55) is folded back on itself and forms returning means which tend to bring the said peg (55) back into the locking position.

10. Folding pushchair according to any of claims 8 and 9, wherein the said housing (57) has two inclined guide planes (510, 511) which cooperate with two corresponding contact surfaces (58, 59) defined on the said strip on either side of the said peg.

11. Folding pushchair according to any of claims 1 to 10, wherein the chassis can be folded by one of the techniques belonging to the group comprising:
- folding flat;
- X-shaped folding, using cross-pieces to ensure that the two lateral parts draw near to one another.
